(19) Europäisches Patentamt
European Patent Office
Office européen des brevets

(11) **EP 4 303 813 A1**

(12) **EUROPEAN PATENT APPLICATION**

(43) Date of publication:
**10.01.2024 Bulletin 2024/02**

(51) International Patent Classification (IPC):
***G06T 7/246*** (2017.01)　　　***G06T 7/292*** (2017.01)

(21) Application number: **23181985.5**

(52) Cooperative Patent Classification (CPC):
**G06T 7/292; G06T 7/248;** G06T 2207/20072;
G06T 2207/30241

(22) Date of filing: **28.06.2023**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.07.2022 CN 202210793867**

(71) Applicant: **FUJITSU LIMITED**
**Kawasaki-shi, Kanagawa 211-8588 (JP)**

(72) Inventors:
• **Wang, Liuan**
  **Beijing, 100027 (CN)**
• **Zhang, Huigang**
  **Beijing, 100027 (CN)**
• **Wang, Ping**
  **Beijing, 100027 (CN)**
• **Sun, Jun**
  **Beijing, 100027 (CN)**

(74) Representative: **Hoffmann Eitle**
**Patent- und Rechtsanwälte PartmbB**
**Arabellastraße 30**
**81925 München (DE)**

(54) **METHOD, APPARATUS AND STORAGE MEDIUM FOR MULTI-TARGET MULTI-CAMERA TRACKING**

(57)　The present disclosure relates to a method, an apparatus and a storage medium for multi-target multi-camera tracking. According to an embodiment of the present disclosure, the method comprises: determining an overall local target trajectory set including a local target trajectory set of each camera by performing single-camera multi-target tracking on a corresponding image sequence provided by each camera of a plurality of cameras; and determining a global target trajectory set for the plurality of cameras by performing multi-camera multi-target matching on the overall local target trajectory set; wherein determining the global target trajectory set comprises: determining a cluster matched global trajectory set by clustering local target trajectories; determining a cost-minimum path set by implementing a cost-minimum path algorithm on a directed graph; and merging corresponding trajectories in the cluster matched global trajectory set based on the cost-minimum path set.

**100**

Figure 1

**Description**

**CROSS-REFERENCE TO RELATED APPLICATIONS**

This application claims the priority benefit of Chinese Patent Application No. 202210793867.1, filed on July 7, 2022 in the China National Intellectual Property Administration, the disclosure of which is incorporated herein in its entirety by reference.

**FIELD OF THE INVENTION**

The present disclosure relates generally to information processing and computer vision, and more particularly, to a method, an apparatus and a storage medium for multi-target multi-camera tracking.

**BACKGROUND OF THE INVENTION**

With the development of computer science and artificial intelligence, it is becoming increasingly universal and effective to use computers to run artificial intelligence models to implement information processing. Computer vision is an important application field of artificial intelligence models.

A hot spot of computer vision technology is multi-target tracking. Multi-target tracking is commonly referred to as MTT (Multiple Target Tracking; sometimes also abbreviated as MOT: Multiple Object Tracking) briefly, which is used to detect and endow identifiers (IDs) to targets of types of interest such as pedestrians, automobiles or/or animals in a video, so as to perform trajectory tracking, without knowing the number of the targets in advance. A desired tracking result is that: different targets own different IDs, so as to achieve work such as precise tracking, precise searching and the like. MTT is a key technology in the field of computer vision, and has been widely applied in fields such as autonomous driving, intelligent monitoring, behavior recognition and the like.

In multi-target tracking, for an input video, a tracking result of targets is output. In a tracking result image, each target is indicated by, for example, a rectangular bounding box with a corresponding ID identifier number. In an image sequence of multiple frames of a video, a moving trajectory of a bounding box of the same ID can be regarded as a trajectory of a target of the ID. In these multiple frames, an image block sequence of multiple image blocks indicated by the bounding box of the ID is referred to as a tracklet (tracklet). In a tracklet, each image block therein can be regarded as a frame of image of the tracklet, and each frame of image can be assigned with information representing time information and spatial position information of a target trajectory.

Considering a limited monitoring space of a camera providing an input video, in practical video monitoring (tracking) applications, it is possible to use multiple cameras to perform monitoring and target tracking for a larger space. This involves multi-camera multi-target tracking (Multi-Target Multi-Camera Tracking, MTMCT). MTMCT, for example, processes inputted image sequences from multiple cameras, and outputs identified image sequences, wherein, if a target with the same ID appears in image sequences from different cameras, it is desired to use bounding boxes of the same target ID to identify image blocks of the target, regardless of whether it crosses cameras. These image blocks corresponding to the bounding boxes of the same target ID constitute a cross-camera tracklet of the target with the target ID. That is, two frames of images in a single tracklet can come from different cameras.

At present, a multi-camera multi-target tracking technology mainly includes two stages: single-camera target tracking, and inter multi-camera matching.

The adverse factors affecting the accuracy of a result of multi-camera multi-target tracking include: occlusion, illumination, attitude changes, etc. It is challenging to improve the accuracy of a result of multi-camera multi-target tracking.

**SUMMARY OF THE INVENTION**

A brief summary of the present disclosure will be given below to provide a basic understanding of some aspects of the present disclosure. It should be understood that the summary is not an exhaustive summary of the present disclosure. It does not intend to define a key or important part of the present disclosure, nor does it intend to limit the scope of the present disclosure. The object of the summary is only to briefly present some concepts, which serves as a preamble of the detailed description that follows.

The technical problems to be solved by embodiments of the present disclosure include but are not limited to at least one of reducing incorrect cross-camera target trajectories, reducing identification-switch, and reducing incorrect target identifier assignment.

According to an aspect of the present disclosure, there is provided a method for multi-target multi-camera tracking. The method comprises: determining an overall local target trajectory set including a local target trajectory set of each camera by performing single-camera multi-target tracking on a corresponding image sequence provided by each camera of a plurality of cameras; and determining a global target trajectory set for the plurality of cameras by performing multi-camera multi-target matching on the overall local target trajectory set; wherein determining the global target trajectory set comprises: determining a cluster matched global trajectory set by clustering local target trajectories in the overall local target trajectory set; determining a cost-minimum path set by implementing a cost-minimum path algorithm on a directed graph constructed with each trajectory in the cluster matched global trajectory set as a vertex; and merging corresponding trajectories in the cluster matched global trajectory set based on the cost-minimum path set.

According to another aspect of the present disclosure, there is provided an apparatus for multi-target multi-camera tracking. The apparatus comprises: a memory having instructions stored thereon; and at least one processor configured to execute the instructions to: determine an overall local target trajectory set including a local target trajectory set of each camera by performing single-camera multi-target tracking on a corresponding image sequence provided by each camera of a plurality of cameras; and determine a global target trajectory set for the plurality of cameras by performing multi-camera multi-target matching on the overall local target trajectory set; wherein determining the global target trajectory set comprises: determining a cluster matched global trajectory set by clustering local target trajectories in the overall local target trajectory set; determining a cost-minimum path set by implementing a cost-minimum path algorithm on a directed graph constructed with each trajectory in the cluster matched global trajectory set as a vertex; and merging corresponding trajectories in the cluster matched global trajectory set based on the cost-minimum path set.

According to still another aspect of the present disclosure, there is provided a non-transitory computer-readable storage medium storing a program. When the program is executed by a computer, the computer implements operations of: determining an overall local target trajectory set including a local target trajectory set of each camera by performing single-camera multi-target tracking on a corresponding image sequence provided by each camera of a plurality of cameras; and determining a global target trajectory set for the plurality of cameras by performing multi-camera multi-target matching on the overall local target trajectory set; wherein determining the global target trajectory set comprises: determining a cluster matched global trajectory set by clustering local target trajectories in the overall local target trajectory set; determining a cost-minimum path set by implementing a cost-minimum path algorithm on a directed graph constructed with each trajectory in the cluster matched global trajectory set as a vertex; and merging corresponding trajectories in the cluster matched global trajectory set based on the cost-minimum path set.

The beneficial effects of the methods, apparatuses and storage media of the present disclosure include at least of: improving the accuracy of a result of multi-camera multi-target tracking, and reducing identification-switch.

## BRIEF DESCRIPTION OF THE DRAWINGS

Embodiments of the present disclosure will be described below with reference to the accompanying drawings, which will help to more easily understand the above and other objects, features and advantages of the present disclosure. The accompanying drawings are merely intended to illustrate the principles of the present disclosure. The sizes and relative positions of units are not necessarily drawn to scale in the accompanying drawings. The same reference numbers may denote the same features. In the accompanying drawings:

Figure 1 illustrates an exemplary flowchart of a method for multi-target multi-camera tracking according to an embodiment of the present disclosure;

Figure 2 illustrates an exemplary data change situation of a method for multi-target multi-camera tracking according to an embodiment of the present disclosure;

Figure 3 illustrates a schematic diagram of single-camera multi-target tracking according to an embodiment of the present disclosure;

Figure 4 illustrates an exemplary local target trajectory according to an embodiment of the present disclosure;

Figure 5 illustrates two exemplary local target trajectories according to an embodiment of the present disclosure;

Figure 6 illustrates two exemplary local target trajectories according to an embodiment of the present disclosure;

Figure 7 illustrates an exemplary flowchart of a method for a clustering operation according to an embodiment of the present disclosure;

Figure 8 illustrates an exemplary flowchart of a method for multi-target multi-camera tracking according to an embodiment of the present disclosure;

Figure 9 illustrate an exemplary block diagram of an apparatus for multi-target multi-camera tracking according to an embodiment of the present disclosure;

Figure 10 is an exemplary block diagram of an apparatus for multi-target multi-camera tracking according to another embodiment of the present disclosure;

Figure 11 is an exemplary block diagram of an information processing apparatus according to an embodiment of the present disclosure.

**DETAILED DESCRIPTION OF THE INVENTION**

Hereinafter, exemplary embodiments of the present disclosure will be described combined with the accompanying drawings. For the sake of clarity and conciseness, the specification does not describe all features of actual embodiments. However, it should be understood that many decisions specific to the embodiments may be made in developing any such actual embodiment, so as to achieve specific objects of a developer, and these decisions may vary as embodiments are different.

It should also be noted herein that, to avoid the present disclosure from being obscured due to unnecessary details, only those device structures closely related to the solution according to the present disclosure are shown in the accompanying drawings, while other details not closely related to the present disclosure are omitted.

It should be understood that, the present disclosure will not be limited only to the described embodiments due to the following description with reference to the accompanying drawings. Herein, where feasible, embodiments may be combined with each other, features may be substituted or borrowed between different embodiments, and one or more features may be omitted in one embodiment.

Computer program code for performing operations of various aspects of embodiments of the present disclosure can be written in any combination of one or more programming languages, the programming languages including object-oriented programming languages, such as Java, Smalltalk, C++ and the like, and further including conventional procedural programming languages, such as "C" programming language or similar programming languages.

Methods of the present disclosure can be implemented by circuitry having corresponding functional configurations. The circuitry includes circuitry for a processor.

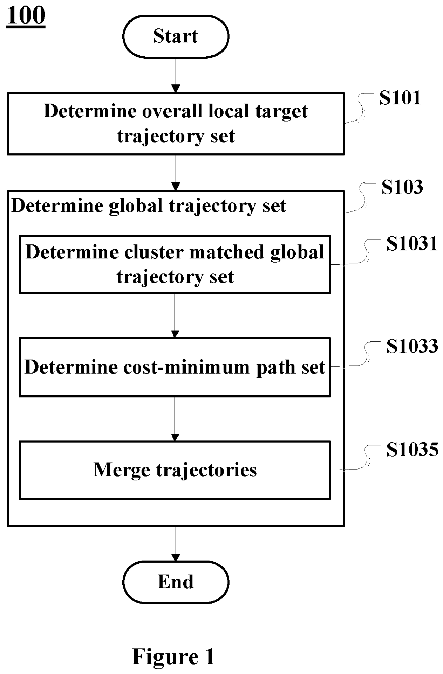

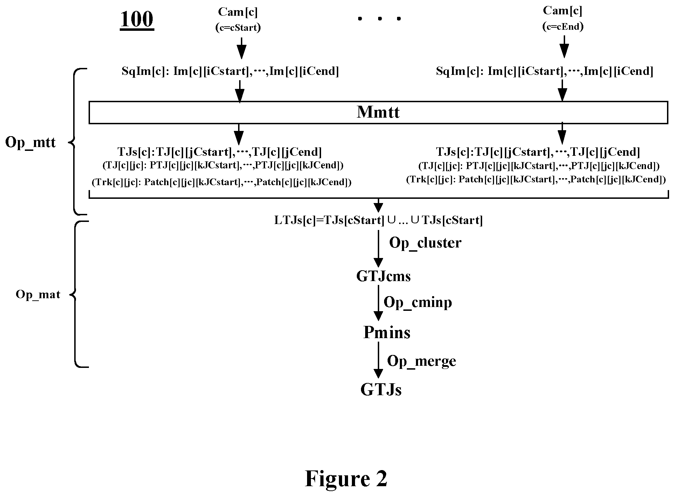

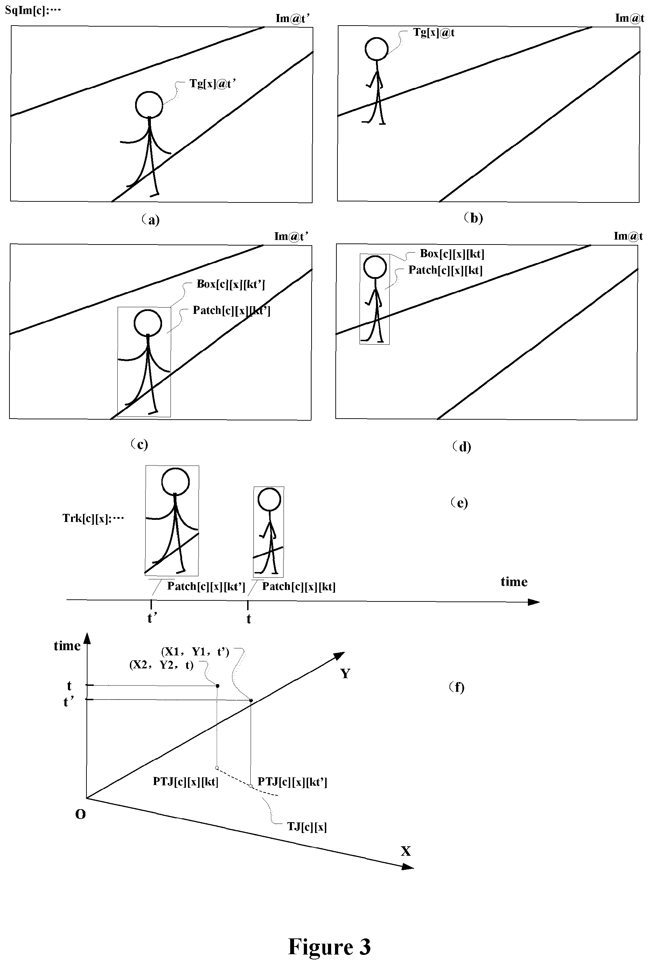

An aspect of the present disclosure relates to a method for Multi-Target Multi-Camera Tracking (MTT). Figure 1 illustrates an exemplary flowchart of a method 100 for multi-target multi-camera tracking according to an embodiment of the present disclosure. Figure 2 illustrates an exemplary data change situation of a method for multi-target multi-camera tracking according to an embodiment of the present disclosure. Figure 3 illustrates a schematic diagram of single-camera multi-target tracking according to an embodiment of the present disclosure. Exemplary description of the MTMCT method of the present disclosure will be made with reference to Figure 1, Figure 2 and Figure 3 below. For the sake of clarity, only a target Tg[x] is exemplarily illustrated in Figure 3.

In operation S101, an overall local target trajectory set including a local target trajectory set of each camera is determined by performing single-camera multi-target tracking on a corresponding image sequence provided by each camera of a plurality of cameras. The operation of this step is marked as a "single-camera multi-target tracking operation Op_mtt".

Referring to Figure 2, a corresponding image sequence (SqIm[c]) provided by each camera (generally represented as Cam[c]) of a plurality of cameras Cam[cStart] to Cam[cEnd] is illustrated. Multi-target tracking is performed by a multi-target tracking model Mmtt used for a single camera, to determine a local target trajectory set TJs[c] of each camera. An overall local target trajectory set LTJs is the union of a plurality of local target trajectory sets TJs[cStart] to TJs[cStart]. As illustrated in Figure 3(a) and Figure 3 (b), the image sequence SqIm[c] provided by the camera Cam[c] includes an image Im@t at a current time t and an image Im@t' at a previous time t', and schematically, one target of a plurality of targets, which is marked as a target Tg[x], is illustrated in the images. As illustrated in Figure 3(a) and Figure 3 (b), in a time period from t to t', the target Tg[x] has moved in a real space (corresponding to a space in the world coordinate system), and in the photographed images, positions of image blocks corresponding to the target Tg[x] have also moved in the image coordinate system XOY (see Figure 3(f)).

The plurality of cameras include, for example, a first camera Cam[1] that monitors a first local space (e.g., a first room) and a second camera Cam[2] that monitors a second local space (e.g., a second room) adjacent to the first local space. It could be understood that, the plurality of cameras can include cameras whose monitoring areas have an overlap.

Referring to Figure 2, the image sequence SqIm[c] includes a plurality of images (frames), arranged in time order, of a video in a period of time which is provided by the camera Cam[c]: Im[c][iCstart] to Im[c][iCend], where c is any integer from cStart to cEnd. An image Im[c][ic] can include images of one or more targets (e.g., a plurality of customers) of types of interest, wherein with the elapse of time, targets may enter or move out of a monitoring range of the camera, so the number of the targets in the image can be changed.

As illustrated in Figure 2, it is possible to process the image sequence SqIm[c] with the multi-target tracking model Mmtt used for the single camera, to obtain a target trajectory set TJs[c] of the camera Cam[c]. Since the target trajectory set TJs[c] corresponds to a set of trajectories of a target in a local space monitored by the single camera Cam[c], the target trajectory set TJs[c] can also be referred to as a single-camera target trajectory set or a local target trajectory set.

The local target trajectory set TJs[c] includes, for example, a plurality of local target trajectories TJ[c][jCstart] to TJ[jCend], one local trajectory (only one target of a type of interest appears in the corresponding image sequence SqIm[c]), zero local trajectory (an empty set; no target of a type of interest appears in the corresponding image sequence SqIm[c]). In Figure 2, the circumstance where the local target trajectory set TJs[c] includes a plurality of local target trajectories TJ[c][jCstart] to TJ[jCend] is illustrated.

Referring to Figure 2, a local target trajectory TJ[c][jc] has, for example, trajectory points PTJ[c] [jc] [kJCstart] to PTJ[c][jc][kJCend]. Each trajectory point PTJ has, for example, at least one of position attributes as follows: an image position attribute PosI, and a spatial position attribute PosS. A value of the image position attribute PosI represents, for this trajectory point, a position of a target image in the image coordinate system. A value of the spatial position attribute PosS represents, for this trajectory point, a position of a target in the world coordinate system. Each trajectory point also has a time attribute time, a value of which represents a corresponding time when a target is at a corresponding spatial position. Figure 3(f) illustrates a local target trajectory TJ[c][x] of the target Tg[x] which is determined based on image sequence SqIm[c] provided by the camera Cam[c], wherein, a trajectory point PTJ[c][x][kt'] in the image coordinate system at the previous time t', with its coordinates being (X1, Y1), and a trajectory point PTJ[c][x][kt] in the image coordinate system at the current time t, with its coordinates being (X2, Y2), are specially illustrated.

One local target trajectory TJ[c][jc] corresponds to one tracklet Trk[c][jc]. As illustrated in Figure 2, the tracklet Trk[c][jc] is an image block sequence: Patch[c][jc][kJCstart] to Patch [c] [kj c] [kJCend], wherein, each image block is an image block in one frame of image from the camera Cam[c], the image block includes an image of a target (i.e., an image block indicated by a rectangular bounding box of a target determined by target detection in a video frame), and each image block can be set with a time attribute, an image position attribute, and a spatial position attribute that indicate time information and spatial position information related to a target trajectory. A value of the time attribute can be a capturing time of a corresponding frame of image. A value of the image position attribute is, for example, a position of a center of a corresponding image block (rectangular bounding box) in a corresponding image. A value of the spatial position attribute can be coordinates (which can be obtained by performing coordinate transformation on an image position according to internal parameters of a corresponding camera) of a point corresponding to a center of a corresponding image block (rectangular bounding box) in the world coordinate system. Each image block Patch[jc][kJC] corresponds to one corresponding trajectory point PTJ[jc][kJC] on a trajectory TJ[jc]. The local target trajectory TJ[jc] can be described or represented by a tracklet Trk[jc]. A target detection operation can provide position information and size information of a bounding box detected, wherein, the position information can be coordinates of both end points of a diagonal of the bounding box, and the size information can be a height of the bounding box. Figure 3(c) illustrates an image block Patch [c] [x] [kt'] indicated by a bounding box Box[c][x][kt'] at the previous time t' which is determined in target detection, which is an image block delimited by the rectangular bounding box Box[c][x][kt']; Figure 3(d) illustrates an image block Patch[c][x][kt] indicated by a bounding box Box[c] [x] [kt] at the current time t which is determined in target detection, which is an image block delimited by the rectangular bounding box Box[c][x][kt]. Figure 3(e) illustrates an image block sequence arranged in time order: ⋯Patch[c][x][kt'], Patch[c][x][kt], which constitutes a tracklet Trk[c][x] of the target Tg[x] with respect to a camera Cam[x].

An overall local target trajectory set LTJs is the union of single-camera target trajectory sets TJs[cStart] to TJs[cEnd]. Since no multi-camera multi-target matching across cameras (i.e. cross-camera trajectory matching) is performed, for a circumstance where there has been appearance of a specific target Tg[x] in videos from both first and second cameras, in the overall local target trajectory set LTJs, the two local target trajectories of the target Tg[x] which correspond to the first and second cameras are not identified with the same ID LTJs. It is desired that, these two local target trajectories are identified with the same ID in response to being found to match (i.e., correspond to the same target) in subsequent operations, and can be merged into one target trajectory identified with the same ID. Such one target trajectory obtained by merging target trajectories of a plurality of cameras can be referred to as a "cross-camera target trajectory". As an example, if single-camera multi-target tracking processing is performed for 2 image sequences provided by 2 cameras to obtain 12 local target trajectories, due to existence of a circumstance where there has been appearance of 2 targets in both camera monitoring spaces of the 2 cameras, in an ideal case a global target trajectory set ultimately obtained through subsequent processing only comprises 10 global target trajectories. In other words, when videos from a plurality of cameras have only been subjected to single-camera multi-target tracking but have not yet been subjected to multi-camera multi-target matching, if videos with addition of target identifiers (e.g., addition of a bounding box with a corresponding identifier in each target image block) are played, different target identifiers in videos from different cameras may correspond to the same target (for example, the 1 # bounding box in a video 1 and the 3 # in a video 2 may correspond to the same person). That is, the target identifier at this time is localized, has a function of distinguishing targets in the same video, and cannot be used for distinguishing targets in different camera videos.

After the image sequence SqIm[c] from the camera Cam[c] is processed through single-camera multi-target tracking, targets in each image in the image sequence are positioned and identified. In playing back the image sequence (video), it is possible to superimpose and display on an image a bounding box of each target having been positioned; bounding boxes of different targets, for example, can be distinguished with different colors, so that a moving trajectory of a target identified with a certain color within a corresponding time period can be clearly seen; of course, during playback, it is also possible to superimpose and display on an image a unique identifier of a target. It is possible to display a tracking result in quasi real-time: after one frame of image is captured, single-camera target matching is performed, to match a target in a new image with a forward trajectory and assign an identifier, thereby displaying a new image on which a bounding box with a determined identifier has been superimposed. After performing multi-camera multi-target matching, it is possible to utilize a shared target identifier set shared by a plurality of cameras to perform displaying in a manner similar to the foregoing display manner; a shared target identifier is global, and in an ideal case, regardless of which camera it is, the same target is assigned with a unique target identifier, and bounding boxes with the same target identifier in different camera videos indicate the same target.

Referring to Figure 1 and Figure 2, in operation S103, a global target trajectory set GTJs for the plurality of cameras Cam[cStart] to Cam[cEnd] is determined by performing multi-camera multi-target matching on the overall local target trajectory set LTJs. The operation of this step is marked as a "multi-camera multi-target matching operation Op_mat". A global target trajectory is equivalent to a trajectory of a target "seen" by a global camera monitoring all local areas. The operation Op_mat comprises: in operation S1031, a cluster matched global trajectory set GTJcms is determined by clustering local target trajectories in the overall local target trajectory set LTJs (referred to as a "clustering operation Op_cluster" briefly); in operation S1033, a cost-minimum path set Pmins is determined by implementing a cost-minimum path algorithm on a directed graph G constructed with each trajectory in the cluster matched global trajectory set GTJcms as a vertex (referred to as a "cost-minimum operation Op_cminp" briefly); in operation S1035, corresponding trajectories in the cluster matched global trajectory set GTJcms are merged based on the cost-minimum path set Pmins (referred to as a "merging operaiton Op_merge" briefly). A trajectory set obtained after completing merging of all mergeable trajectories indicated in the minimum path set Pmins for the cluster matched global trajectory set GTJcms is the "global target trajectory set GTJs". Trajectories in the global target trajectory set GTJs are distinguished by target identifiers from a shared target identifier set shared by a plurality of cameras. Regardless of a camera from which trajectory points on a trajectory come, trajectory points of the same target have been assigned with one target identifier from the target identifier set.

In clustering local target trajectories in the overall local target trajectory set LTJs, when two local target trajectories are clustered into one class, it is regarded that the two local target trajectories correspond to the same target (that is, the two local target trajectories match each other), and thus, these two local target trajectories can be merged into one trajectory, reducing the number of trajectories in the trajectory set. Since there may be trajectory merging in the clustering operation Op_cluster, the number of trajectories in the obtained cluster matched global trajectory set GTJcms may be less than the number of trajectories in the overall local target trajectory set LTJs.

In the merging operation Op_merge, trajectory merging (i.e. trajectory matching) may also occur, and thus the number of trajectories in the global target trajectory set GTJs may be less than the number of trajectories in the cluster matched global trajectory set GTJcms. For example, a target Tg[x] has a trajectory $TJ_{1,2}$ at times t1 to t2, a target Tg[x'] has a trajectory $TJ_{3,4}$ at times t3 to t4, and when it is determined that the trajectory $TJ_{1,2}$ matches the trajectory $TJ_{3,4}$ (that is, it is regarded that the target Tg[x] and the target Tg[x'] are the same target Tg[X]), the trajectory $TJ_{1,2}$ is merged (connected) with the trajectory $TJ_{3,4}$ into a trajectory indicating a trajectory of the target Tg[X] at the times t1 to t4.

Exemplary description of further details of the method 100 will be made below.

In an embodiment, the single-camera multi-target tracking operation Op_mtt comprises a target detection operation Op_detB, a re-identification feature extraction operation Op_extF, a single-camera target matching operation Op_matS, and a local target trajectory post-processing operation Op_postP. The single-camera multi-target tracking operation Op_mtt will detect targets in each image of a plurality of images that are input, each target is represented by an image block indicated by a rectangular bounding box, and by matching image blocks at different times, it is possible to assign an intra single-camera target identifier for each image block. A time sequence of image blocks of the same intra single-camera target identifier indicates one local target trajectory in the local target trajectory set.

For the target detection operation Op_detB, it is possible to detect, with a target detection network NwTag (e.g., YoloX), targets in an image in a corresponding image sequence provided by a camera, and to output information (e.g., position, size, etc.) on rectangular bounding boxes (referred to as detected bounding boxes briefly) and bounding box confidence of the detected targets. Such a target detection network is a conventional technique, and will no longer be repeatedly described herein.

For the re-identification feature extraction operation Op_extF, a target-related re-identification feature Freid of an image block indicated by each detected bounding box in the image can be provided by a re-identification network NwReID. Such a re-identification network is a conventional technique, and will no longer be repeatedly described herein.

In an embodiment, determining an overall local target trajectory set LTJs comprises, for each camera of the plurality of cameras, performing a single-camera target matching operation Op_matS. The single-camera target matching operation Op_matS comprises determining a current local target trajectory set $TJs_t$ based on a previous local target trajectory set $TJs_{t'}$ (i.e., a set of trajectories having been detected) and a current image $Im_t$ in the corresponding image sequence. The corresponding image sequence includes adjacent images: the previous image $Im_{t'}$ and the current image $Im_t$, where t' is a previous time, t is a current time, and it is also possible to include an image captured prior to the time t' (when $Im_{t'}$ is not a start frame of the image sequence). Determining a current local target trajectory set $TJs_t$ comprises: determining, with a target detection network NwTag, detected bounding boxes Box[bStart] to Box[bEnd] and bounding box confidence cfd[bStart] to cfd[bEnd] of a predetermined class of targets in the current image $Im_t$; and updating the previous local target trajectory set $TJs_t$, as the current local target trajectory set $TJs_t$ by performing single-camera target matching based on each detected bounding box in the current image $Im_t$, each bounding box confidence and a previous image $Im_{t'}$. The previous image $Im_{t'}$ is the last image (i.e., latest image) in a corresponding image sequence of the previous local target trajectory set $TJs_{t'}$.

In an embodiment, updating a previous local target trajectory set by performing single-camera target matching based on each detected bounding box in the current image, each bounding box confidence and a previous image comprises: determining target identifiers of credible bounding boxes whose bounding box confidence is greater than a bounding box confidence threshold among the detected bounding boxes by performing first tracking matching on the credible bounding boxes and each target trajectory having been detected in the previous local target trajectory set; determining target identifiers of remaining detected bounding boxes by performing, for unmatched trajectories among target trajectories having been detected in the previous local target trajectory set, second tracking matching in the remaining detected bounding boxes; and generating, for bounding boxes whose bounding box confidence is greater than the bounding box confidence threshold and which fail to match the target trajectories having been detected in the previous local target trajectory set among the detected bounding boxes, new target identifiers.

Exemplarily, the single-camera target matching operation Op_matS can comprise steps of: (1) at the current time t, predicting, with a Kalman filter, a position of a bounding box at the current time t according to a bounding box at the time t'; (2) performing id matching (first tracking matching) on detected bounding boxes whose bounding box confidence is greater than a bounding box confidence threshold (e.g., 0.5) and each trajectory having been detected in the previous local target trajectory set $TJs_{t'}$; (3) for unmatched trajectories, performing matching (second tracking matching) in remaining detected bounding boxes; (4) generating, for bounding boxes whose bounding box confidence is greater than the bounding box confidence threshold and which fail to match the target trajectories having been detected in the previous local target trajectory set $TJs_{t'}$, new target identifiers; (5) updating parameters of the Kalman filter according to a latest bounding box set corresponding to a current trajectory point. In an example, in the single-camera multi-target tracking operation Op_mtt for one camera, for a first image in an image sequence, it is possible to only perform the target detection operation Op_detB, without performing the single-camera target matching operation Op_matS, wherein, the operation Op_detB detects targets in the first image, determines bounding boxes thereof, and obtains n trajectory points (i.e., n trajectories) corresponding to the number of the targets, each trajectory point corresponds to a corresponding bounding box, and the n trajectories constitute a local target trajectory set. For subsequent images, it is possible to perform the single-camera target matching operation Op_matS, to determine a current local target trajectory set (i.e., to update the local target trajectory set) by matching targets detected in a current image with trajectories in the previous local target trajectory set. The local target trajectory set is gradually updated iteratively based on each image, in an order of images in the image sequence, thereby ultimately obtaining a local target trajectory set for the entire image sequence.

In an embodiment, at least one of the first tracking matching and the second tracking matching is performed by: predicting predicted bounding boxes for the current image based on the detected bounding boxes in the previous image (i.e., the image at the previous time t'); and determining target identifiers of detected bounding boxes in the current image (i.e., the image at the current time t) based on an area overlap cost function and a vertex overlap cost function associated with the detected bounding boxes and the predicted bounding boxes of the current image.

In an embodiment, for the image sequence provided by the camera Cam[c], a target identifier of a bounding box of a target detected in an image at the current time t can be determined based on a bounding box of a target detected in a previous frame of image (corresponding to the time t') through single-camera target matching, thereby updating the previous local target trajectory set as the current local target trajectory set by, for example, adding new trajectories or trajectory points to the previous local target trajectory set. The single-camera target matching operation Op_matS exemplarily can include operations as follows.

(1) Calculating an overlap cost function $Iou_{cost}$ between a predicted bounding box and a detected bounding box.

$$Iou_{cost} = 2 * s_{overlap} / (s_{predicted} + s_{detected}) \qquad (1)$$

Where, $s_{overlap}$ is an overlap area of the predicted bounding box and the detected bounding box, $s_{predicted}$ is an area of the predicted bounding box, $s_{detected}$ is an area of the detected bounding box.

(2) Calculating an overlap cost function $y_{cost}$ between a vertex of the predicted bounding box and a vertex of the detected bounding box.

$$Y_{cost} = 2 * \left|Y0_{predicetd} - Y0_{detected}\right| / \left(h_{predicted} + h_{detected}\right) * scale \qquad (2)$$

Where, $Y0_{predicted}$ is a vertical coordinate of an upper right corner of the predicted bounding box, $Y0_{detected}$ is a vertical coordinate of an upper right corner of the detected bounding box, $h_{predicted}$ is a height of the predicted bounding box, $h_{detected}$ is a height of the detected bounding box, and scale is scaling, which exemplarily can be taken as 10 herein.

(3) Calculating an overall cost function $m_{cost}$.

$$m_{cost} = \lambda * Iou_{cost} + (1 - \lambda) * Y_{cost} \qquad (3)$$

Where, $\lambda$ is a predetermined weighting constant, which exemplarily can be taken as 0.8 herein.

(4) Performing matching for the overall cost function using the Hungarian algorithm, to obtain a matching result. The matching result includes: matching a detected bounding box Box[b] of a current image to a previous local target trajectory TJ[x], assigning a target identifier x of the previous local target trajectory for the detected bounding box, adding corresponding trajectory points of the bounding box Box[b] to the local target trajectory TJ[x] as new trajectory points on the local target trajectory TJ[x], or, if no matched trajectory is found for the detected bounding box Box[b] of the current image in the previous local trajectory set, then assigning a new target identifier for the corresponding trajectory points of the detected bounding box Box[b], generating a new trajectory and adding it to the previous local trajectory set, and using the updated previous local trajectory set as the current local trajectory set.

In order to improve the accuracy of determining a trajectory in the local trajectory set, suppress occurrence of different targets in the same trajectory, and suppress identification-switch (incorrectly match an image block of a target x' to a trajectory of an existing target x), determining a current local trajectory set further comprises: updating the current local target trajectory set by performing post-processing on the current local trajectory set.

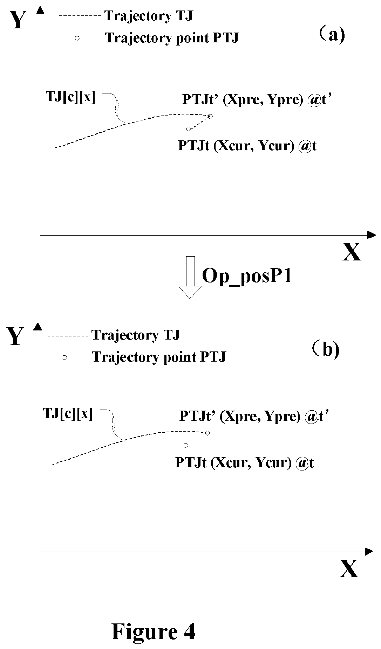

In an embodiment, performing post-processing on the current local trajectory set comprises (marked as a "first post-processing operation Op_posP1" briefly): determining whether to generate a new trajectory based on a motion characteristic of a trajectory in the current local target trajectory set. Figure 4 illustrates an exemplary local target trajectory TJ[c][x] according to an embodiment of the present disclosure, wherein Figure 4(a) illustrates a trajectory TJ[c][x] with respect to the target Tg[x] in the current local trajectory set $TJs_t$, which includes a current trajectory point PTJt and a previous trajectory point PTJt'. (Xpre, Ypre) is image coordinates of a trajectory point PTJt' of previous data t', and (Xcur, Ycur) is image coordinates of a trajectory point PTJt of current data t. In an example, determining whether to generate a new trajectory based on a motion characteristic of a trajectory in the current local target trajectory set $TJs_t$ comprises: for a trajectory TJ[c][x] in the current local target trajectory set $TJs_t$: determining a motion direction dirt of a current trajectory point PTJt of the trajectory TJ[c][x]; determining a moving distance dis of the current trajectory point PTJt in the motion direction dirt relative to a previous trajectory point PTJt', of the current trajectory point PTJt, on the trajectory TJ[c][x]; and if the moving distance dis is greater than a predetermined distance threshold disTh, the motion direction dirt of the current trajectory point PTJt is opposite to a motion direction dirt' of the previous trajectory point PTJt', and a similarity Sim(Freidt,Freidt') between a re-identification feature Freidt of a corresponding image block of the current trajectory point PTJt and a re-identification feature Freidt' of a corresponding image block of the previous trajectory point PTJt' is less than a first similarity threshold sTh1, then generating a new trajectory associated with the corresponding image block of the current trajectory point. The similarity Sim(Freidt,Freidt') can be a cosine similarity between the features Freidt and Freidt'. Figure 4(b) illustrates that after the first post-processing operation Op_postP1 is performed on the trajectory TJ[c][x], the trajectory of the target Tg[x] is updated to exclude the trajectory point PTJt, and a new trajectory associated with the trajectory point PTJt is generated (for example, the trajectory point PTJt is marked as a trajectory point of a new target Tg[x']).

In an example, the motion direction dir is one of a positive X direction, a negative X direction, a positive Y direction, and a negative Y direction; and the positive X direction is perpendicular to the positive Y direction. As illustrated in Figure 4, the trajectory TJ[c] [x] of the target Tg[x] comprises the trajectory points at both ends; the trajectory point PTJt' at the previous time t', and the trajectory point PTJt at the current time. The motion direction can be determined based on Equation (4).

$$
dir=
\begin{cases}
\text{"positive X direction"} & \text{If } |Xcur\text{-}Xpre|{\geq}|Ycur\text{-}Ypre| \text{ and} Xcur{\geq}Xpre \\
\text{"negative X direction"} & \text{If } |Xcur\text{-}Xpre|{\geq}|Ycur\text{-}Ypre| \text{ and } Xcur{<}Xpre \\
\text{"positive Y direction"} & \text{If } |Ycur\text{-}Ypre|{\geq}|Xcur\text{-}Xpre| \text{ and } Ycur{\geq}Ypre \\
\text{"negative Y direction"} & \text{If } |Ycur\text{-}Ypre|{\geq}|Xcur\text{-}Xpre| \text{ and } Ycur{<}Ypre
\end{cases}
$$

(4)

The re-identification feature Freidt of the corresponding image block of the current trajectory point and the re-identification feature Freidt' of the corresponding image block of the previous trajectory point can be extracted from corresponding image blocks by a re-identification network NwReID.

The moving distance dis of the current trajectory point PTJt in the motion direction dirt relative to the previous trajectory point PTJt', of the current trajectory point PTJt, on the trajectory TJ[c][x] can be determined according to Equation (5). That is, the moving distance can be a component of a real moving distance in a moving direction in the image.

$$
dis=
\begin{cases}
Xcur\text{-}Xpre & \text{If } dir=\text{"positive X direction"} \\
Xpre\text{-}Xcur & \text{If } dir=\text{"negative X direction"} \\
Ycur\text{-}Ypre & \text{If } dir=\text{"positive Y direction"} \\
Ypre\text{-}Ycur & \text{If } dir=\text{"negative Y direction"}
\end{cases}
$$

(5)

Referring to Figure 4, if: for a forward trajectory point PTJt', a motion direction dirt'= "positive X direction", and for the current trajectory point PTJt, a motion direction dirt="negative X direction", that is, the two motion directions are opposite; and a moving distance of the target from t' to t dis>disTh; Sim(Freidt,Freidt')<sTh1, then it is very possible that a target corresponding to the trajectory point PTJt is different from a target corresponding to the trajectory point PTJt', that is, it is very possible that the trajectory point PTJt does not match the trajectory TJ[c][x]. Therefore, a new trajectory associated with the corresponding image block of the current trajectory point is generated, the trajectory point PTJt in the trajectory TJ[c][x] in the current local target trajectory set is removed, and the new trajectory is added to the current local target trajectory set, so as to update the current local target trajectory set. Exemplarily, sTh1 is 0.6. This is conductive to avoiding id-switch from occurring when an overlap between image blocks of different targets occurs in the image.

In an image of an image sequence, an overlap between image blocks of a plurality of targets may occur. At this time, identification-switch is prone to occur. Therefore, the inventor conceived the following embodiment related to a "second post-processing operation Op_posP2" to suppress occurrence of this case.

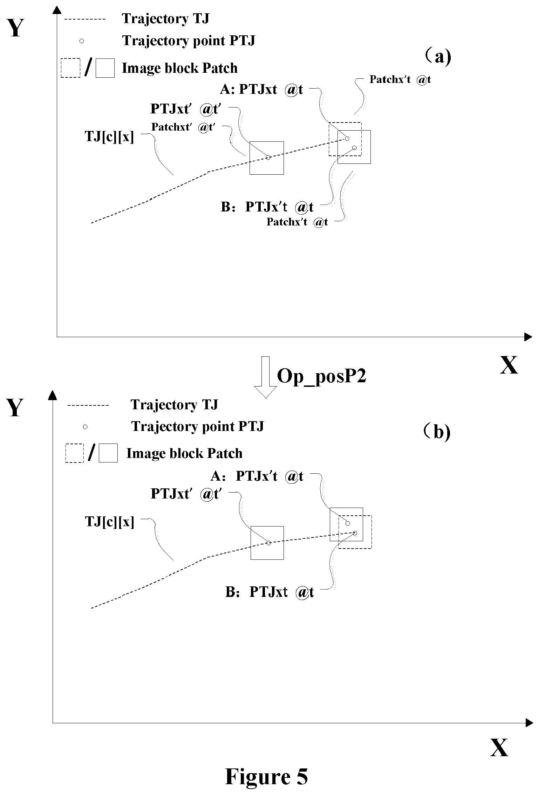

Figure 5 illustrates two exemplary local target trajectories according to an embodiment of the present disclosure, wherein trajectory points and schematic corresponding image blocks are also illustrated, Figure 5(a) is a trajectory prior to a post-processing operation, and Figure 5(b) is a trajectory after the post-processing operation. In an embodiment, performing post-processing on the current local trajectory set comprises: as shown in Figure 5(a), determining, for a new trajectory point PTJx't (referred to as a "trajectory point B" briefly, which corresponds to a trajectory which at present includes only one trajectory point, that is, an image block of the target Tg[x'] is a newly appearing image block in the current image Imt at the current time t, and the target Tg[x'] has never appeared in previous images (including the previous image Imt' at the previous time t' adjacent to the image Imt)) of a corresponding new target Tg[x'] in the current local target trajectory set, an overlapping bounding box Boxxt (which, in case of occurrence of an overlap, corresponds to a trajectory point PTJxt in a current local trajectory set TJs[c][x], and is referred to as a "trajectory point A" briefly) whose degree of overlap with a corresponding bounding box Boxx't of the new trajectory point PTJx't is the largest in the current image Imt; determining, for the corresponding bounding box Boxx't and the overlapping bounding box Boxxt, whether a first similarity condition C1 as follows is satisfied.

$$
Sim(Freid\_x't,Freid\_xt')\text{-}Sim(Freid\_xt,Freid\_xt')>sTh2
$$

(6)

Target identifiers of the corresponding bounding box Boxx't and the overlapping bounding box Boxxt are exchanged in a case where it is determined that the first similarity condition C1 is satisfied. Sim(Freid_x't, Freid_xt') is a similarity between a re-identification feature Freid_x't of an image block of the target identifier x' corresponding to the corresponding bounding box Boxx't in the current image Imt and a re-identification feature Freid_xt' of an image block of the target identifier x corresponding to the overlapping bounding box in the previous image Imt'; Sim(Freid_xt, Freid_xt') is a similarity between re-identification features Freid_xt and Freid_xf of image blocks of the target identifier x corresponding to the overlapping bounding box Boxxt in the current image Imt and the previous image Imt'; and sTh2 is a second similarity threshold. Exemplarily, sTh2 is taken as 0.1. The similarity can be a cosine similarity between feature vectors. As an example, referring to Figure 5(a), for a trajectory TJ[c][x] of the target Tg[x] in the current local target set TJs and a trajectory TJ[c][x'] (which is a new trajectory and comprises only one trajectory point PTJx't, while the trajectory TJ[c][x] comprises a plurality of trajectory points PTJxt, PTJxt', etc.) of the target Tg[x'], through the post-processing described in this embodiment, trajectory updating may occur: the similarity satisfies the condition C1 before the target identifiers of the overlapping bounding box is exchanged, then referring to Figure 5(b), an end trajectory point of the trajectory TJ[c][x] of the target Tg[x] is updated to a trajectory B, while the target identifier of the trajectory point A is updated to x', that is, they become new trajectory points.

For a case where two targets overlap and then are separated, since occlusion has occurred, in this case the separated trajectory points may have been assigned with incorrect target identifiers. Therefore, the inventor conceived the following embodiment related to a "third post-processing operation Op_posP3" to suppress occurrence of this case.

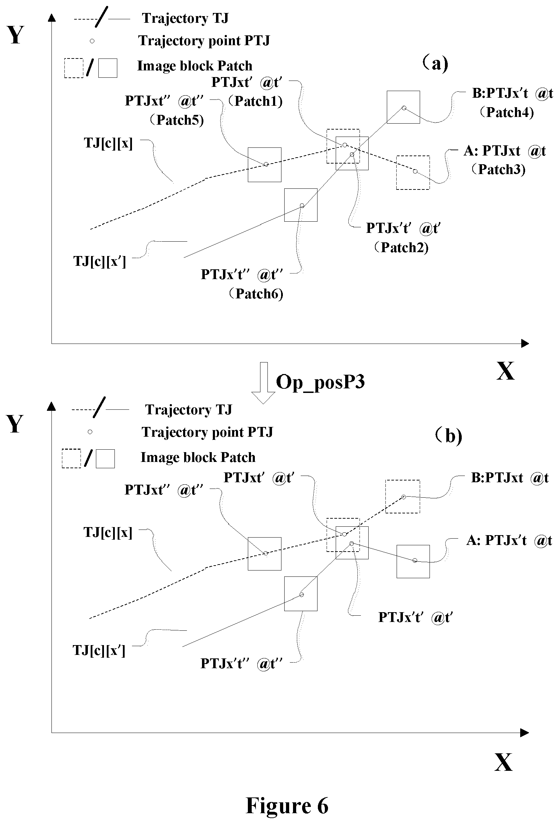

In an embodiment, the third post-processing operation Op_posP3 comprises: determining whether a first trajectory and a second trajectory that satisfy an overlapping condition as follows exist in the current local trajectory set TJs$_t$: a first image block at a previous time t' prior to a current time t in a corresponding image block sequence of the first trajectory overlaps with a second image block at the previous time t' in a corresponding image block sequence of the second trajectory; a third image block at the current time t in the corresponding image block sequence of the first trajectory has no overlap with a fourth image block at the current time t in the corresponding image block sequence of the second trajectory; and a fifth image block at a more previous time t" prior to the previous time t' in the corresponding image block sequence of the first trajectory has no overlap with a sixth image block at the more previous time t" in the corresponding image block sequence of the second trajectory. Figure 6 illustrates two exemplary local target trajectories according to an embodiment of the present disclosure, and also illustrates trajectory points and schematic corresponding image blocks, wherein, Figure 6(a) illustrates a first trajectory TJ[c][x] and a second trajectory TJ[c][x'] that satisfy the above-mentioned overlapping condition. As illustrated in Figure 6(a), in the first trajectory TJ[c][x] and the second trajectory TJ[c][x'] in the current local trajectory set TJs$_t$, the first trajectory TJ[c][x] comprises: a trajectory point PTJxt (its corresponding image block is marked as a "third image block Patch3", which can also be referred to as a "trajectory point A" briefly) at the current time t, a trajectory point PTJxt' (its corresponding image block is marked as a "first image block Patch1") at the previous time t', and a trajectory point PTJxt" (its corresponding image block is marked as a "fifth image block Patch5) at the more previous time t". The second trajectory TJ[c][x'] comprises: a trajectory point PTJx't (its corresponding image block is marked as a "fourth image block Patch4", which can also be referred to as a "trajectory point B" briefly) at the current time t, a trajectory point PTJx't' (its corresponding image block is marked as a "second image block Patch2") at the previous time t', and a trajectory point PTJx't' (its corresponding image block is marked as a "sixth image block Patch6") at the more previous time t".

The third post-processing operation Op_posP3 further comprises: determining, for the first trajectory TJ[c][x] and the second trajectory TJ[c][x'] that satisfy the above overlapping condition, whether a second similarity condition C2 as follows is satisfied.

$$\text{Sim}(\text{Freid\_xt''},\text{Freid\_x't})+\text{Sim}(\text{Freid\_x't''},\text{Freid\_xt})-\text{Sim}(\text{Freid\_xt},\text{Freid\_xt''})+\text{Sim}(\text{Freid\_x't''},\text{Freid\_x't})$$

$$>\text{sTh3} \qquad\qquad (7)$$

Sim(Freid_xt",Freid_x't) is a similarity between a re-identification feature Freid_xt" of the fifth image block and a re-identification feature Freid_x't of the fourth image block;

Sim(Freid_x't", Freid_xt) is a similarity between a re-identification feature Freid_x't" of the sixth image block and a re-identification feature Freid_xt of the third image block;

Sim(Freid_xt, Freid_xt") is a similarity between the re-identification feature Freid_xt" of the fifth image block and the re-identification feature Freid_x of the third image block;

Sim(Freid_x't", Freid_x't) is a similarity between the re-identification feature Freid_x't" of the sixth image block and the re-identification feature Freid_x't of the fourth image block.

sTh3 is a third similarity threshold.

The third post-processing operation Op_posP3 further comprises: exchanging target identifiers of the fourth image block and the third image block in a case where it is determined that the second similarity condition C2 is satisfied. Figure 6(b) illustrates updated first second trajectories after exchanging target identifiers in a case where the second similarity condition C2 is satisfied, wherein the trajectory points A, B have exchanged target identifiers.

Further exemplary description of the clustering operation Op_cluster in the method 100 will be made below.

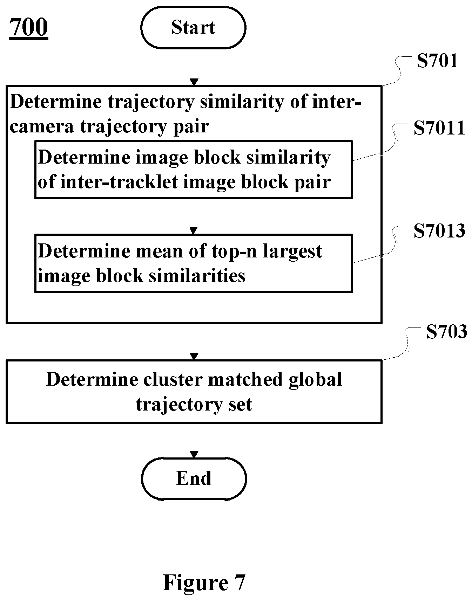

Figure 7 illustrates an exemplary flowchart of a method 700 for a clustering operation Op_cluster according to an embodiment of the present disclosure. The clustering operation Op_cluster determines a cluster matched global trajectory set GTJcms by clustering local target trajectories in the overall local target trajectory set GTJs.

In operation S701, based on re-identification feature pairs of a plurality of corresponding cross-camera image block pairs of each inter-camera trajectory pair in the local target trajectory set GTJs, a trajectory similarity of the inter-camera trajectory pair is determined. For example, a local target trajectory obtained from the image sequence provided by the first camera Cam[cl] includes a first trajectory TJ[c1][j1], TJ[c1][j1] corresponds to K1 image blocks, wherein any image block is marked as a first image block Patch[cl][jl][kl], a local target trajectory obtained from the image sequence provided by the second camera Cam[c2] includes a second trajectory TJ[c2][j2], TJ[c2][j2] corresponds to K2 image blocks, wherein any image block is marked as a second image block Patch[c2][j2][k2], then it is possible to determine a trajectory similarity SimTbC (TJ[c1][j1],TJ[c2][j2]) (also referred to as an "inter-camera trajectory similarity") of an inter-camera trajectory pair (the first trajectory TJ[c1][j1], the second trajectory TJ[c2][j2]) composed of the first and second trajectories based on re-identification feature pairs (Freid[c1][j1][k1], Freid[c2][j2][k2]) of K1*K2 cross-camera image block pairs composed of the K1 first image blocks and the K2 second image images.

In an example, a trajectory similarity is determined by calculating the mean of image block similarities, which is marked as an "averaging operation Op_mean". Determining the trajectory similarity SimTbC (TJ[cl][jl],TJ[c2][j2]) comprises: Step S7011, determining an image block similarity SimPbT(Patch[cl][j 1][kl], Patch[c2][j2][k2]) of an inter-tracklet image block pair based on a re-identification feature pair of an inter-tracklet image block pair of two corresponding tracklets of the inter-camera trajectory pair that serves as a cross-camera image block pair (Patch[cl][j 1][kl], Patch[c2][j2][k2]); operation S7013, determining the mean of the top-n largest image block similarities among image block similarities of a plurality of inter-tracklet image block pairs of two corresponding tracklets of the inter-camera trajectory pair, as the trajectory similarity SimTbC (TJ[c1][j1],TJ[c2][j2]). n is an integer, for example, n=5. For example, the image block similarity can be a cosine similarity of re-identification features of two image blocks. For example, for the first trajectory TJ[c1][j1] with K1 trajectory points and the second trajectory TJ[c2][j2] with K2 trajectory points, K1*K2 image block similarities SimPbT can be obtained, and the mean of the top-n largest image block similarities among these image block similarities SimPbT is taken as the similarity SimTbC of the trajectory pair composed of the first and second trajectories. Exemplarily, if there are 2 cameras, an image from a first camera obtains J1 trajectories, and an image from a second camera obtains J2 trajectories, then the number of trajectory similarities obtained is J1*J2.

In operation S703, a cluster matched global trajectory set GTJcms is determined by clustering a plurality of target trajectories in the local target trajectory set based on trajectory similarities of a plurality of inter-camera trajectory pairs in the local target trajectory set. In an example, the Agglomerative clustering algorithm is used to cluster a plurality of target trajectories in the local target trajectory set in case of a lower threshold (e.g., 0.5). Compared to the number of trajectories in the overall local target trajectory set LTJs, the number of trajectories in the cluster matched global trajectory set GTJcms may decrease.

Further exemplary description of the merging operation Op_merge in the method 100 will be made below.

A directed graph constructed with each trajectory in the cluster matched global trajectory set GTJcms as a vertex is "G (V, E)", a vertex in the directed graph is represented by $v_i$, and $e_{i,j}$ is a directed edge between the vertex v; and a vertex $v_j$. During construction, first, a cost of a directed edge between each pair of vertices is initialized as infinity. Then, a cost of a corresponding directed edge is adjusted based on times corresponding to end points of a trajectory pair, which will be described by way of a trajectory pair composed of trajectories TJa, TJb. If, for a first trajectory TJa and a second trajectory TJb in the cluster matched global trajectory set GTJcms, a difference between a start time of the second trajectory TJb and an end time of the first trajectory TJa is greater than zero and less than a predetermined time threshold tTh (e.g., 1 second), then a cost of a directed edge between two vertices associated with the first trajectory TJa and the second trajectory TJb is adjusted based on at least one of a trajectory similarity cost function cost_reid, a temporal cost function cost_time and a spatial distance cost function cost spatial associated with the first TJa and the second trajectory TJb.

As shown in Equation (8), the trajectory similarity cost function cost_reid is associated with a trajectory similarity Sim(TJa, TJb) between the first trajectory TJa and the second trajectory TJb.

$$\text{cost\_reid} = \log(1 - \text{Sim}(\text{TJa, TJb})) \qquad\qquad (8)$$

A determination manner of the trajectory similarity Sim(TJa, TJb) can be the same as the determination manner of the trajectory similarity as used in the clustering operation. It is also possible to use, as Sim(TJa, TJb), a re-identification feature similarity between re-identification features Freid_a, Freid b of image block sequences from the trajectories TJa and TJb respectively, wherein the features Freid_a, Freid_b are re-identification features of key image blocks with identification degrees higher than a predetermined identification degree in the corresponding image block sequences of the first trajectory TJa and the second trajectory TJb. The identification degree can be determined based on at least one of bounding box confidence, an overlapping ratio, and a relative height of an image block (a ratio of an image block height to an image height), and thereby the key image blocks can be selected from the corresponding image block sequences based on identification degrees of the image blocks to calculate Sim(TJa, TJb). Image blocks with the highest identification degree are preferable.

As shown in Equation (9), the temporal cost function cost_time is associated with the difference diffTime between the start time of the second trajectory and the end time of the first trajectory.

$$\text{cost\_time} = \log(|\text{diffTime}|) \qquad\qquad (9)$$

As shown in Equation (10), the spatial distance cost function cost_spatial is associated with a spatial distance disSpatial, in the world coordinate system, between an end location of the first trajectory and a start location of the second trajectory.

$$\text{cost\_spatial} = \log(\text{disSpatial}) \qquad\qquad (10)$$

A cost cost of a directed edge between two vertices can be a total cost of the weighted sum of at least two of the above three costs, for example, a total cost as shown in Equation (11).

$$\text{cost} = \alpha\,\text{cost\_reid} + \beta\,\text{cost\_time} + \gamma\,\text{cost\_spatial} \qquad (11)$$

$\alpha$, $\beta$, $\gamma$ are weighting weights, $\alpha + \beta + \gamma = 1$.

In order to determine a cost-minimum path in the directed graph G, a virtual start point can be set as a vertex of the directed graph when a cost-minimum path algorithm is implemented, and a cost from the vertex to any other vertex is set to 0.

The Bellman ford algorithm can solve a single-source shortest path problem in a cost graph. In the algorithm, weight values of edges can be negative values, which is an improvement to the Dijkstra shortest path algorithm in which weight values cannot be negative values. In an example of the disclosure, the Bellman Ford algorithm is used to calculate a cost-minimum path from a virtual vertex to other vertices, and all trajectory vertices under the cost-minimum path are multi-cameras multi-target tracking results. Ultimately, it is possible to merge corresponding trajectories in the cluster matched global trajectory set based on a cost-minimum path set, thereby obtaining the global target trajectory set GTJs.

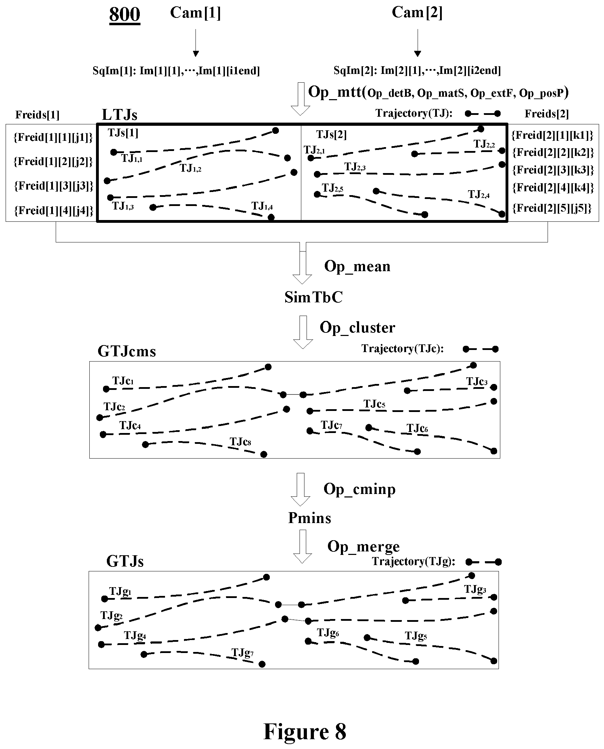

Figure 8 illustrates an exemplary flowchart of a method 800 for multi-target multi-camera tracking according to an embodiment of the present disclosure. For the sake of conciseness, a plurality of cameras are a first camera Cam[1] and a second camera Cam[2], and their monitoring areas are adjacent but not overlapping.

As illustrated in Figure 8, the camera Cam[1] provides an image sequence SqIm[1]: Im[1][1],...,Im[1][i1end]; the second camera Cam[2] provides an image sequence SqIm[1]: Im[1][1],...,Im[1][i1end].

An overall local target trajectory set LTJs can be obtained by performing a single-camera multi-target tracking operation Op_mtt on the image sequences SqIm[1], SqIm[2], respectively, wherein the operation Op_mtt can comprise: a target detection operation Op detB, a re-identification feature extraction operation Op extF, a single-camera target matching operation Op_matS, and a local target trajectory post-processing operation Op_postP. Exemplarily, the overall local target trajectory set LTJs illustrated in Figure 8 is composed of a local target trajectory set TJs[1] corresponding to the first camera and a second local target trajectory set TJs[2] corresponding to the second camera, totaling 9 trajectories, wherein, the local target trajectory set TJs[1] comprises 4 trajectories: $TJ_{1,1}$, $TJ_{1,2}$, $TJ_{1,3}$, $TJ_{1,4}$; the second local target trajectory set TJs[2] comprises 5 trajectories: $TJ_{2,1}$, TJz,z, $TJ_{2,3}$, $TJ_{2,4}$, TJz,s. A start point and an end point of each trajectory are also illustrated with solid dots in the figure. In Figure 8, a re-identification feature set Freids[1] for the first camera and a re-identification feature set Freids[2] for the second camera which are determined through the re-identification feature extraction operation Op_extF are also illustrated. The re-identification feature set Freids[1] comprises re-identification feature sets {Freid[1][1][j1]}, {Freid[1][2][j2]}, {Freid[1][3][j3]} and {Freid[1][4][j4]} corresponding to the respective trajectories; the re-identification feature set Freids[2] comprises re-identification feature sets {Freid[2][1][k1]},{Freid[2][2][k2]},{Freid[2][3][k3]},{Freid[2][4][k4]},{Freid[2][5][j5]} corresponding to the respective trajectories; wherein, for the sake of conciseness, only one representative element, but not all elements, is shown in the set symbol "{}".

Based on re-identification features, a trajectory similarity SimTbC can be determined by performing an averaging operation Op_mean. In this example, 4*5 inter-camera trajectory similarities SimTbC will be determined.

Based on a plurality of inter-camera trajectory similarities determined, a cluster matched global trajectory set GTJcms can be determined by performing a clustering operation Op_cluster. As illustrated in Figure 8, in this example, the clustering operation clusters the trajectories $TJ_{1,2}$ and $TJ_{2,1}$ in LTJs into one class, and thereby merges the two trajectories to obtain a trajectory $TJc_2$ in the trajectory set GTJcms. Accordingly, the trajectory number of the trajectory set GTJcms is 8. Note that: in Figure 8, with respect to the trajectory set LTJs, the trajectories in the trajectory set GTJcms have been renumbered, respectively as: $TJc_1$, $TJc_2$, $TJc_3$, $TJc_4$, $TJc_5$, $TJc_6$, $TJc_7$, $TJc_8$.

A cost-minimum path set Pmins is determined by performing a cost-minimum operation Op_cminp for the cluster matched global trajectory set GTJcms.

A merging operation Op_merge is performed for the cluster matched global trajectory set GTJcms: the trajectory set GTJcms is updated as the global target trajectory set GTJs by clustering corresponding trajectories in the cluster matched global trajectory set GTJcms based on the cost-minimum path set Pmins. As illustrated in Figure 8, in this example, based on a cost-minimum path connecting trajectories $TJc_4$ and TJcs in GTJcms in cost-minimum path set Pmins, the trajectories $TJc_4$ and TJcs in GTJcms are merged as a new trajectory $TJg_4$. Accordingly, the trajectory number of the trajectory set GTJs is 7. Note that: in Figure 8, with respect to the trajectory set GTJcms, the trajectories in the trajectory set GTJs have been renumbered, respectively as: $TJg_1$, $TJg_2$, $TJg_3$, $TJg_4$, $TJg_5$, $TJg_6$, $TJg_7$; the trajectories $TJg_2$, $TJg_4$ in the trajectory set GTJs show that two different targets each successively appear in two camera monitoring areas, forming two cross-camera trajectories.

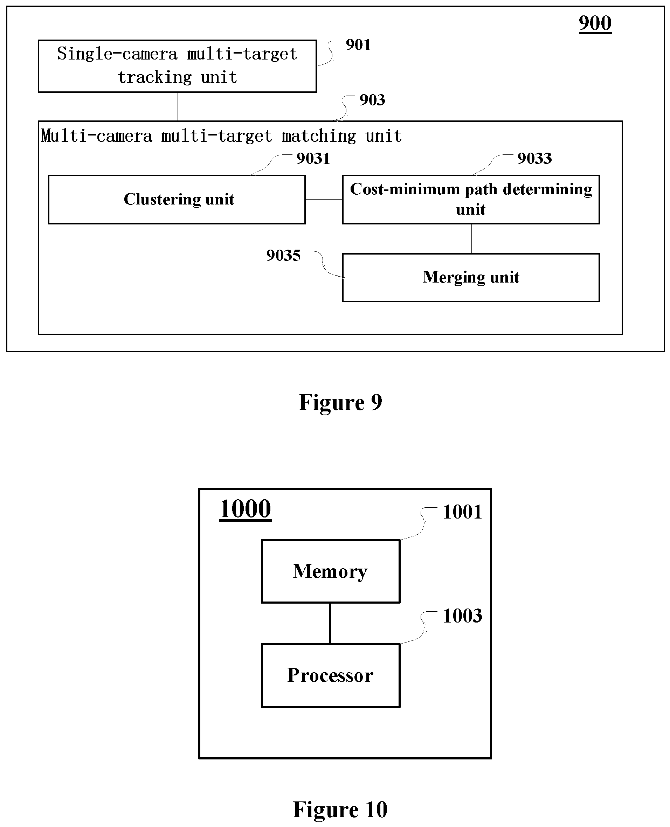

In an embodiment of the present disclosure, there is provided an apparatus for multi-target multi-camera tracking. Exemplary description will be made with reference to Figure 9 below. Figure 9 illustrates an exemplary block diagram of an apparatus 900 for multi-target multi-camera tracking according to an embodiment of the present disclosure. The apparatus 900 comprises: a single-camera multi-target tracking unit 901, and a multi-camera multi-target matching unit 903. The single-camera multi-target tracking unit 901 is configured to: determine an overall local target trajectory set including a local target trajectory set of each camera by performing single-camera multi-target tracking on a corresponding image sequence provided by each camera of a plurality of cameras. The multi-camera multi-target matching unit 903 is configured to: determine a global target trajectory set for the plurality of cameras by performing multi-camera multi-target matching on the overall local target trajectory set. The multi-camera multi-target matching unit 903 comprises: a clustering unit 9031, a cost-minimum path determining unit 9033, and a merging unit 9035. The clustering unit 903 is configured to: determine a cluster matched global trajectory set by clustering local target trajectories in the overall local target trajectory set. The cost-minimum path determining unit 9033 is configured to: determine a cost-minimum path set by implementing a cost-minimum path algorithm on a directed graph constructed with each trajectory in the cluster matched global trajectory set as a vertex. The merging unit 9035 is configured to: merge corresponding trajectories in the cluster matched global trajectory set based on the cost-minimum path set. The apparatus 900 has a corresponding relationship with the method 100. For the further configuration of the apparatus 900, reference may be made to the description of the method 100 of the present disclosure.

In an embodiment of the present disclosure, there is provided another apparatus for multi-target multi-camera tracking. Exemplary description will be made with reference to Figure 10 below. Figure 10 illustrates an exemplary block diagram of an apparatus 1000 for multi-target multi-camera tracking according to an embodiment of the present disclosure. The apparatus 1000 comprises: a memory 1001 having instructions stored thereon; and at least one processor 1003 connected with the memory 1001 and used to execute the instructions on the memory 1001 to: determine an overall local target trajectory set including a local target trajectory set of each camera by performing single-camera multi-target tracking on a corresponding image sequence provided by each camera of a plurality of cameras; and determine a global target trajectory set for the plurality of cameras by performing multi-camera multi-target matching on the overall local target trajectory set; wherein determining the global target trajectory set comprises: determining a cluster matched global trajectory set by clustering local target trajectories in the overall local target trajectory set; determining a cost-minimum path set by implementing a cost-minimum path algorithm on a directed graph constructed with each trajectory in the cluster matched global trajectory set as a vertex; and merging corresponding trajectories in the cluster matched global trajectory set based on the cost-minimum path set. The instruction has a corresponding relationship with the method 100. For the further configuration situation of the apparatus 1000, reference may be made to the description of the method 100 of the present disclosure.

An aspect of the present disclosure provides a non-transitory computer-readable storage medium having a program stored thereon. When the program is executed by a computer, it is possible to implement operations of: determining an overall local target trajectory set including a local target trajectory set of each camera by performing single-camera multi-target tracking on a corresponding image sequence provided by each camera of a plurality of cameras; and determining a global target trajectory set for the plurality of cameras by performing multi-camera multi-target matching on the overall local target trajectory set; wherein determining the global target trajectory set comprises: determining a cluster matched global trajectory set by clustering local target trajectories in the overall local target trajectory set; determining a cost-minimum path set by implementing a cost-minimum path algorithm on a directed graph constructed with each trajectory in the cluster matched global trajectory set as a vertex; and merging corresponding trajectories in the cluster matched global trajectory set based on the cost-minimum path set. The program has a corresponding relationship with the method 100. For the further configuration situation of the program, reference may be made to the description of the method 100 of the present disclosure.

According to an aspect of the present disclosure, there is further provided an information processing apparatus.

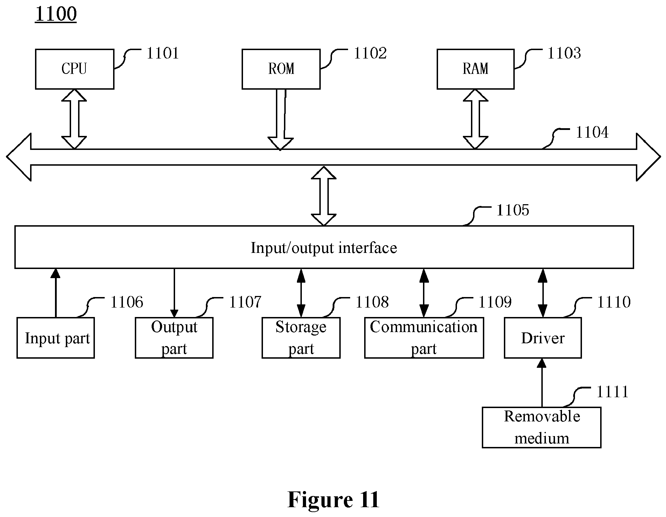

Figure 11 illustrates an exemplary block diagram of an information processing apparatus 1100 according to an embodiment of the present disclosure. In Figure 11, a Central Processing Unit (CPU) 1101 executes various processing according to programs stored in a Read-Only Memory (ROM) 1102 or programs loaded from a storage part 1108 to a Random Access Memory (RAM) 1103. In the RAM 1103, data needed when the CPU 1101 executes various processing and the like is also stored as needed.

The CPU 1101, the ROM 1102 and the RAM 1103 are connected to each other via a bus1104. An input/output interface 1105 is also connected to the bus 1104.

The following components are connected to the input/output interface 1105: an input part 1106, including a soft keyboard and the like; an output part 1107, including a display such as a Liquid Crystal Display (LCD) and the like, as well as a speaker and the like; the storage part 1108 such as a hard disc and the like; and a communication part 1109 including a network interface card such as an LAN card, a modem and the like. The communication part 1109 executes communication processing via a network such as the Internet, a local area network, a mobile network or a combination thereof.

A driver 1110 is also connected to the input/output interface 1105 as needed. A removable medium 1111 such as a semiconductor memory and the like is installed on the driver 1110 as needed, such that programs read therefrom are installed in the storage device 1108 as needed.

The CPU 1101 can run a program corresponding to a method for multi-target multi-camera tracking.

In the embodiments of the present disclosure, rectangular bounding box information, motion information, and re-identification features are fused in single-camera multi-target tracking, which can optimize multi-target tracking performance under a single camera and effectively reduce id-switch. In multi-camera matching, target matching is optimized according to trajectory similarities (re-identification similarities), time and space as a whole by utilizing a cost-minimum path algorithm based on a directed graph, thereby improving performance. The use of the cost-minimum path algorithm based on the directed graph can avoid errors brought by occlusion, illumination, and attitude changes to multi-camera multi-target tracking.

The beneficial effects of the methods, apparatuses, and storage media of the present disclosure include at least one of: improving the accuracy of a result of multi-target multi-camera tracking, and reducing identification-switch.

As described above, according to the present disclosure, the principle of multi-target multi-camera tracking has been disclosed. It should be noted that, the effects of the solution of the present disclosure are not necessarily limited to the above-mentioned effects, and in addition to or instead of the effects described in the preceding paragraphs, any of the effects as shown in the specification or other effects that can be understood from the specification can be obtained.

Although the present invention has been disclosed above through the description with regard to specific embodiments of the present invention, it should be understood that those skilled in the art can design various modifications (including, where feasible, combinations or substitutions of features between various embodiments), improvements, or equivalents to the present invention within the scope of the appended claims. These modifications, improvements or equivalents should also be considered to be included within the protection scope of the present invention.

It should be emphasized that, the term "comprise/include" as used herein refers to the presence of features, elements, operations or assemblies, but does not exclude the presence or addition of one or more other features, elements, operations or assemblies.

In addition, the methods of the various embodiments of the present invention are not limited to be executed in the time order as described in the specification or as shown in the accompanying drawings, and may also be executed in other time orders, in parallel or independently. Therefore, the execution order of the methods as described in the specification fails to constitute a limitation to the technical scope of the present invention.

Appendix

The present disclosure includes but is not limited to the following solutions.

1. A computer-implemented method for multi-target multi-camera tracking, characterized by comprising:

determining an overall local target trajectory set including a local target trajectory set of each camera by performing single-camera multi-target tracking on a corresponding image sequence provided by each camera of a plurality of cameras; and

determining a global target trajectory set for the plurality of cameras by performing multi-camera multi-target matching on the overall local target trajectory set;

wherein determining the global target trajectory set for the plurality of cameras comprises:

determining a cluster matched global trajectory set by clustering local target trajectories in the overall local target trajectory set;

determining a cost-minimum path set by implementing a cost-minimum path algorithm on a directed graph constructed with each trajectory in the cluster matched global trajectory set as a vertex; and

merging corresponding trajectories in the cluster matched global trajectory set based on the cost-minimum path set.

2. The method according to Appendix 1, wherein determining the overall local target trajectory set comprises, for each camera of the plurality of cameras, determining a current local target trajectory set based on a previous local target trajectory set and a current image in the corresponding image sequence; and

determining a current local trajectory set comprises:

determining, with a target detection network, detected bounding boxes and bounding box confidence of a predetermined class of targets in the current image; and

updating the previous local target trajectory set as the current local target trajectory set by performing single-camera target matching based on each detected bounding box in the current image, each bounding box confidence and a previous image;

wherein the previous image is the last image in a corresponding image sequence of the previous local target trajectory set.

3. The method according to Appendix 2, wherein updating a previous local target trajectory set by performing single-camera target matching based on each detected bounding box in the current image, each bounding box confidence and a previous image comprises:

determining target identifiers of credible bounding boxes whose bounding box confidence is greater than a bounding box confidence threshold among the detected bounding boxes by performing first tracking matching on the credible bounding boxes and each target trajectory having been detected in the previous local target trajectory set;

determining target identifiers of remaining detected bounding boxes by performing, for unmatched trajectories among target trajectories having been detected in the previous local target trajectory set, second tracking matching in the remaining detected bounding boxes; and

generating, for bounding boxes whose bounding box confidence is greater than the bounding box confidence threshold and which fail to match the target trajectories having been detected in the previous local target trajectory set among the detected bounding boxes, new target identifiers.

4. The method according to Appendix 3, wherein at least one of the first tracking matching and the second tracking matching is performed by:

predicting predicted bounding boxes for the current image based on the detected bounding boxes in the previous image; and

determining target identifiers of detected bounding boxes in the current image based on an area overlap cost function and a vertex overlap cost function associated with the detected bounding boxes and the predicted bounding boxes of the current image.

5. The method according to Appendix 2, wherein determining a current local trajectory set further comprises: updating the current local target trajectory set by performing post-processing on the current local trajectory set.

6. The method according to Appendix 5, wherein performing post-processing on the current local trajectory set comprises: determining whether to generate a new trajectory based on a motion characteristic of a trajectory in the current local target trajectory set.

7. The method according to Appendix 6, wherein determining whether to generate a new trajectory based on a motion characteristic of a trajectory in the current local target trajectory set comprises: for a trajectory in the current local target trajectory set:

determining a motion direction of a current trajectory point of the trajectory;

determining a moving distance of the current trajectory point in the motion direction relative to a previous trajectory point, of the current trajectory point, on the trajectory; and

if the moving distance is greater than a predetermined distance threshold, the motion direction of the current trajectory point is opposite to a motion direction of the previous trajectory point, and a similarity between a re-identification feature of a corresponding image block of the current trajectory point and a re-identification feature of a corresponding image block of the previous trajectory point is less than a first similarity threshold, then generating a new trajectory associated with the corresponding image block of the current trajectory point.

8. The method according to Appendix 7, wherein the motion direction is one of a positive X direction, a negative X direction, a positive Y direction, and a negative Y direction; and the positive X direction is perpendicular to the positive Y direction.

9. The method according to Appendix 5, wherein performing post-processing on the current local trajectory set comprises:

determining, for a new trajectory point of a corresponding new target in the current local target trajectory set, an overlapping bounding box whose degree of overlap with a corresponding bounding box of the new trajectory point is the largest in the current image;

determining, for the corresponding bounding box and the overlapping bounding box, whether a first similarity condition as follows is satisfied:

$$\mathrm{Sim}(Freid\_x't, Freid\_xt') - \mathrm{Sim}(Freid\_xt, Freid\_xt') > sTh2;$$

exchanging target identifiers of the corresponding bounding box and the overlapping bounding box in a case where it is determined that the first similarity condition is satisfied;

wherein $\mathrm{Sim}(Freid\_x't, Freid\_xt')$ is a similarity between a re-identification feature $Freid\_x't$ of an image block of the target identifier corresponding to the corresponding bounding box in the current image and a re-identification feature $Freid\_xt'$ of an image block of the target identifier corresponding to the overlapping bounding box in the previous image;

$\mathrm{Sim}(Freid\_xt, Freid\_xt')$ is a similarity between re-identification features $Freid\_xt$ and $Freid\_xt'$ of image blocks of the target identifier corresponding to the overlapping bounding box in the current image and the previous image; and

sTh2 is a second similarity threshold.

10. The method according to Appendix 5, wherein performing post-processing on the current local trajectory set comprises:

determining whether a first trajectory and a second trajectory that satisfy an overlapping condition as follows exist in the current local trajectory set:

a first image block at a previous time t' prior to a current time t in a corresponding image block sequence of the first trajectory overlaps with a second image block at the previous time t' in a corresponding image block sequence of the second trajectory;

a third image block at the current time t in the corresponding image block sequence of the first trajectory has no overlap with a fourth image block at the current time t in the corresponding image block sequence of the second trajectory; and

a fifth image block at a more previous time t" prior to the previous time t' in the corresponding image block sequence of the first trajectory has no overlap with a sixth image block at the more previous time t" in the corresponding image block sequence of the second trajectory;

determining, for the first trajectory and the second trajectory that satisfy the overlapping condition, whether a second similarity condition as follows is satisfied:

$$Sim(Freid\_xt'',Freid\_x't)+Sim(Freid\_x't'',Freid\_xt)-Sim(Freid\_xt,Freid\_xt'')+Sim(Freid\_x't'',Freid\_x't)>sTh3;$$

and

exchanging target identifiers of the fourth image block and the third image block in a case where it is determined that the second similarity condition is satisfied;

wherein Sim(Freid_xt", Freid_x't) is a similarity between a re-identification feature Freid_xt" of the fifth image block and a re-identification feature Freid_x't of the fourth image block;

Sim(Freid _x't", Freid_xt) is a similarity between a re-identification feature Freid_x't" of the sixth image block and a re-identification feature Freid_xt of the third image block;

Sim(Freid_xt, Freid_xt") is a similarity between the re-identification feature Freid_xt" of the fifth image block and the re-identification feature Freid_x of the third image block;

Sim(Freid_x't", Freid_x't) is a similarity between the re-identification feature Freid_x't" of the sixth image block and the re-identification feature Freid_x't of the fourth image block; and

sTh3 is a third similarity threshold.

11. The method according to Appendix 1, wherein determining a cluster matched global trajectory set by clustering local target trajectories in the overall local target trajectory set comprises:

determining, based on re-identification feature pairs of a plurality of corresponding cross-camera image block pairs of each inter-camera trajectory pair in the local target trajectory set, a trajectory similarity of the inter-camera trajectory pair; and

determining the cluster matched global trajectory set by clustering a plurality of target trajectories in the local target trajectory set based on trajectory similarities of a plurality of inter-camera trajectory pairs in the local target trajectory set.

12. The method according to Appendix 11, wherein the trajectory similarity of the inter-camera trajectory pair is the mean of the top-n largest image block similarities among image block similarities of a plurality of inter-tracklet image block pairs of two corresponding tracklets of the inter-camera trajectory pair.

13. The method according to Appendix 12, wherein an image block similarity of the inter-tracklet image block pair is determined based on a re-identification feature pair of an inter-tracklet image block pair of the two corresponding tracklets that serves as a cross-camera image block pair.

14. The method according to Appendix 1, wherein the directed graph is constructed by:

> initializing a cost of a directed edge between each pair of vertices as infinity; and

> if, for a first trajectory and a second trajectory in the cluster matched global trajectory set, a difference between a start time of the second trajectory and an end time of the first trajectory is greater than zero and less than a predetermined time threshold, then adjusting a cost of a directed edge between two vertices associated with the first trajectory and the second trajectory based on at least one of a trajectory similarity cost function, a temporal cost function and a spatial distance cost function associated with the first trajectory and the second trajectory;

> wherein the trajectory similarity cost function is associated with a trajectory similarity between the first trajectory and the second trajectory;

> the temporal cost function is associated with the difference between the start time of the second trajectory and the end time of the first trajectory; and

> the spatial distance cost function is associated with a spatial distance, in the world coordinate system, between an end location of the first trajectory and a start location of the second trajectory.

15. An apparatus for multi-target multi-camera tracking, characterized by comprising:

> a memory having instructions stored thereon; and

> at least one processor connected with the memory and configured to execute the instructions to:

>> determine an overall local target trajectory set including a local target trajectory set of each camera by performing single-camera multi-target tracking on a corresponding image sequence provided by each camera of a plurality of cameras; and

>> determine a global target trajectory set for the plurality of cameras by performing multi-camera multi-target matching on the overall local target trajectory set;

> wherein determining the global target trajectory set for the plurality of cameras comprises:

>> determining a cluster matched global trajectory set by clustering local target trajectories in the overall local target trajectory set;

>> determining a cost-minimum path set by implementing a cost-minimum path algorithm on a directed graph constructed with each trajectory in the cluster matched global trajectory set as a vertex; and

>> merging corresponding trajectories in the cluster matched global trajectory set based on the cost-minimum path set.

16. The apparatus according to Appendix 15, wherein determining the overall local target trajectory set comprises, for each camera of the plurality of cameras, determining a current local target trajectory set based on a previous local target trajectory set and a current image in the corresponding image sequence; and

> determining a current local trajectory set comprises:

>> determining, with a target detection network, detected bounding boxes and bounding box confidence of a predetermined class of targets in the current image; and

updating the previous local target trajectory set as the current local target trajectory set by performing single-camera target matching based on each detected bounding box in the current image, each bounding box confidence and a previous image;

wherein the previous image is the last image in a corresponding image sequence of the previous local target trajectory set.

17. The apparatus according to Appendix 16, wherein updating a previous local target trajectory set by performing single-camera target matching based on each detected bounding box in the current image, each bounding box confidence and a previous image comprises:

determining target identifiers of credible bounding boxes whose bounding box confidence is greater than a bounding box confidence threshold among the detected bounding boxes by performing first tracking matching on the credible bounding boxes and each target trajectory having been detected in the previous local target trajectory set;

determining target identifiers of remaining detected bounding boxes by performing, for unmatched trajectories among target trajectories having been detected in the previous local target trajectory set, second tracking matching in the remaining detected bounding boxes; and

generating, for bounding boxes whose bounding box confidence is greater than the bounding box confidence threshold and which fail to match the target trajectories having been detected in the previous local target trajectory set among the detected bounding boxes, new target identifiers.

18. The apparatus according to Appendix 17, wherein at least one of the first tracking matching and the second tracking matching is performed by:

predicting predicted bounding boxes for the current image based on the detected bounding boxes in the previous image; and
determining target identifiers of detected bounding boxes in the current image based on an area overlap cost function and a vertex overlap cost function associated with the detected bounding boxes and the predicted bounding boxes of the current image.

19. The apparatus according to Appendix 16, wherein determining a current local trajectory set further comprises: updating the current local target trajectory set by performing post-processing on the current local trajectory set.

20. A non-transitory computer-readable storage medium storing a program, wherein when the program is executed by a computer, the computer implements operations of:

determining an overall local target trajectory set including a local target trajectory set of each camera by performing single-camera multi-target tracking on a corresponding image sequence provided by each camera of a plurality of cameras; and

determining a global target trajectory set for the plurality of cameras by performing multi-camera multi-target matching on the overall local target trajectory set;

wherein determining the global target trajectory set for the plurality of cameras comprises:

determining a cluster matched global trajectory set by clustering local target trajectories in the overall local target trajectory set;

determining a cost-minimum path set by implementing a cost-minimum path algorithm on a directed graph constructed with each trajectory in the cluster matched global trajectory set as a vertex; and

merging corresponding trajectories in the cluster matched global trajectory set based on the cost-minimum path set.

**Claims**

1. A computer-implemented method (100) for multi-target multi-camera tracking, **characterized by** comprising:

   determining (S101) an overall local target trajectory set including a local target trajectory set of each camera by performing single-camera multi-target tracking on a corresponding image sequence provided by each camera of a plurality of cameras; and
   determining (S103) a global target trajectory set for the plurality of cameras by performing multi-camera multi-target matching on the overall local target trajectory set;
   wherein determining the global target trajectory set for the plurality of cameras comprises:

      determining (S1031) a cluster matched global trajectory set by clustering local target trajectories in the overall local target trajectory set;
      determining (S1033) a cost-minimum path set by implementing a cost-minimum path algorithm on a directed graph constructed with each trajectory in the cluster matched global trajectory set as a vertex; and
      merging (S1035) corresponding trajectories in the cluster matched global trajectory set based on the cost-minimum path set.

2. The method according to claim 1, wherein determining the overall local target trajectory set comprises, for each camera of the plurality of cameras, determining a current local target trajectory set based on a previous local target trajectory set and a current image in the corresponding image sequence; and

   determining a current local trajectory set comprises:

      determining, with a target detection network, detected bounding boxes and bounding box confidence of a predetermined class of targets in the current image; and
      updating the previous local target trajectory set as the current local target trajectory set by performing single-camera target matching based on each detected bounding box in the current image, each bounding box confidence and a previous image;

   wherein the previous image is the last image in a corresponding image sequence of the previous local target trajectory set.

3. The method according to claim 2, wherein updating a previous local target trajectory set by performing single-camera target matching based on each detected bounding box in the current image, each bounding box confidence and a previous image comprises:

      determining target identifiers of credible bounding boxes whose bounding box confidence is greater than a bounding box confidence threshold among the detected bounding boxes by performing first tracking matching on the credible bounding boxes and each target trajectory having been detected in the previous local target trajectory set;
      determining target identifiers of remaining detected bounding boxes by performing, for unmatched trajectories among target trajectories having been detected in the previous local target trajectory set, second tracking matching in the remaining detected bounding boxes; and
      generating, for bounding boxes whose bounding box confidence is greater than the bounding box confidence threshold and which fail to match the target trajectories having been detected in the previous local target trajectory set among the detected bounding boxes, new target identifiers.

4. The method according to claim 3, wherein at least one of the first tracking matching and the second tracking matching is performed by:

      predicting predicted bounding boxes for the current image based on the detected bounding boxes in the previous image; and
      determining target identifiers of detected bounding boxes in the current image based on an area overlap cost function and a vertex overlap cost function associated with the detected bounding boxes and the predicted bounding boxes of the current image.

5. The method according to claim 2, wherein determining a current local trajectory set further comprises:

updating the current local target trajectory set by performing post-processing on the current local trajectory set.

6. The method according to claim 5, wherein performing post-processing on the current local trajectory set comprises: determining whether to generate a new trajectory based on a motion characteristic of a trajectory in the current local target trajectory set.

7. The method according to claim 6, wherein determining whether to generate a new trajectory based on a motion characteristic of a trajectory in the current local target trajectory set comprises:
for a trajectory in the current local target trajectory set:

determining a motion direction of a current trajectory point of the trajectory;
determining a moving distance of the current trajectory point in the motion direction relative to a previous trajectory point, of the current trajectory point, on the trajectory; and
if the moving distance is greater than a predetermined distance threshold, the motion direction of the current trajectory point is opposite to a motion direction of the previous trajectory point, and a similarity between a re-identification feature of a corresponding image block of the current trajectory point and a re-identification feature of a corresponding image block of the previous trajectory point is less than a first similarity threshold, then generating a new trajectory associated with the corresponding image block of the current trajectory point.

8. The method according to claim 7, wherein the motion direction is one of a positive X direction, a negative X direction, a positive Y direction, and a negative Y direction; and
the positive X direction is perpendicular to the positive Y direction.

9. The method according to claim 5, wherein performing post-processing on the current local trajectory set comprises:

determining, for a new trajectory point of a corresponding new target in the current local target trajectory set, an overlapping bounding box whose degree of overlap with a corresponding bounding box of the new trajectory point is the largest in the current image;
determining, for the corresponding bounding box and the overlapping bounding box, whether a first similarity condition as follows is satisfied:

$$\mathrm{Sim}(Freid\_x't, Freid\_xt') - \mathrm{Sim}(Freid\_xt, Freid\_xt') > sTh2;$$

exchanging target identifiers of the corresponding bounding box and the overlapping bounding box in a case where it is determined that the first similarity condition is satisfied;
wherein $\mathrm{Sim}(Freid\_x't, Freid\_xt')$ is a similarity between a re-identification feature $Freid\_x't$ of an image block of the target identifier corresponding to the corresponding bounding box in the current image and a re-identification feature $Freid\_xt'$ of an image block of the target identifier corresponding to the overlapping bounding box in the previous image;
$\mathrm{Sim}(Freid\_xt, Freid\_xt')$ is a similarity between re-identification features $Freid\_xt$ and $Freid\_xt'$ of image blocks of the target identifier corresponding to the overlapping bounding box in the current image and the previous image; and
sTh2 is a second similarity threshold.

10. The method according to claim 5, wherein performing post-processing on the current local trajectory set comprises:

determining whether a first trajectory and a second trajectory that satisfy an overlapping condition as follows exist in the current local trajectory set:

a first image block at a previous time t' prior to a current time t in a corresponding image block sequence of the first trajectory overlaps with a second image block at the previous time t' in a corresponding image block sequence of the second trajectory;
a third image block at the current time t in the corresponding image block sequence of the first trajectory has no overlap with a fourth image block at the current time t in the corresponding image block sequence of the second trajectory; and
a fifth image block at a more previous time t" prior to the previous time t' in the corresponding image block sequence of the first trajectory has no overlap with a sixth image block at the more previous time t" in the corresponding image block sequence of the second trajectory;

determining, for the first trajectory and the second trajectory that satisfy the overlapping condition, whether a second similarity condition as follows is satisfied:

$$Sim(Freid\_xt'',Freid\_x't)+Sim(Freid\_x't'',Freid\_xt)-Sim(Freid\_xt,Freid\_xt'')+Sim(Freid\_x't'',Freid\_x't)>sTh3;$$

and
exchanging target identifiers of the fourth image block and the third image block in a case where it is determined that the second similarity condition is satisfied;
wherein $Sim(Freid\_xt'', Freid\_x't)$ is a similarity between a re-identification feature $Freid\_xt''$ of the fifth image block and a re-identification feature $Freid\_x't$ of the fourth image block;
$Sim(Freid\_x't'', Freid\_xt)$ is a similarity between a re-identification feature $Freid\_x't''$ of the sixth image block and a re-identification feature $Freid\_xt$ of the third image block;
$Sim(Freid\_xt, Freid\_xt'')$ is a similarity between the re-identification feature $Freid\_xt''$ of the fifth image block and the re-identification feature $Freid\_x$ of the third image block;
$Sim(Freid\_x't'', Freid\_x't)$ is a similarity between the re-identification feature $Freid\_x't''$ of the sixth image block and the re-identification feature $Freid\_x't$ of the fourth image block; and
sTh3 is a third similarity threshold.

11. The method according to claim 1, wherein determining a cluster matched global trajectory set by clustering local target trajectories in the overall local target trajectory set comprises:

determining (S701), based on re-identification feature pairs of a plurality of corresponding cross-camera image block pairs of each inter-camera trajectory pair in the local target trajectory set, a trajectory similarity of the inter-camera trajectory pair; and
determining (S703) the cluster matched global trajectory set by clustering a plurality of target trajectories in the local target trajectory set based on trajectory similarities of a plurality of inter-camera trajectory pairs in the local target trajectory set.

12. The method according to claim 11, wherein the trajectory similarity of the inter-camera trajectory pair is the mean of the top-n largest image block similarities among image block similarities of a plurality of inter-tracklet image block pairs of two corresponding tracklets of the inter-camera trajectory pair.

13. The method according to claim 12, wherein an image block similarity of the inter-tracklet image block pair is determined based on a re-identification feature pair of an inter-tracklet image block pair of the two corresponding tracklets that serves as a cross-camera image block pair.

14. An apparatus (1000) for multi-target multi-camera tracking, **characterized by** comprising:

a memory (1001) having instructions stored thereon; and
at least one processor (1003) connected with the memory and configured to execute the instructions to:

determine (S101) an overall local target trajectory set including a local target trajectory set of each camera by performing single-camera multi-target tracking on a corresponding image sequence provided by each camera of a plurality of cameras; and
determine (S103) a global target trajectory set for the plurality of cameras by performing multi-camera multi-target matching on the overall local target trajectory set;

wherein determining the global target trajectory set for the plurality of cameras comprises:

determining (S1031) a cluster matched global trajectory set by clustering local target trajectories in the overall local target trajectory set;
determining (S1033) a cost-minimum path set by implementing a cost-minimum path algorithm on a directed graph constructed with each trajectory in the cluster matched global trajectory set as a vertex; and

merging (S1035) corresponding trajectories in the cluster matched global trajectory set based on the cost-minimum path set.

15. A non-transitory computer-readable storage medium storing a program, wherein when the program is executed by a computer, the computer implements operations of:

determining (S101) an overall local target trajectory set including a local target trajectory set of each camera by performing single-camera multi-target tracking on a corresponding image sequence provided by each camera of a plurality of cameras; and
determining (S103) a global target trajectory set for the plurality of cameras by performing multi-camera multi-target matching on the overall local target trajectory set;
wherein determining the global target trajectory set for the plurality of cameras comprises:

determining (S1031) a cluster matched global trajectory set by clustering local target trajectories in the overall local target trajectory set;
determining (S1033) a cost-minimum path set by implementing a cost-minimum path algorithm on a directed graph constructed with each trajectory in the cluster matched global trajectory set as a vertex; and
merging (S1035) corresponding trajectories in the cluster matched global trajectory set based on the cost-minimum path set.

__100__

```
            ┌─────────┐
            │  Start  │
            └────┬────┘
                 │
                 ▼
┌──────────────────────────────┐        S101
│  Determine overall local target │
│        trajectory set          │
└───────────────┬──────────────┘
                │
                ▼
┌──────────────────────────────────────┐   S103
│ Determine global trajectory set        │
│  ┌──────────────────────────────────┐ │   S1031
│  │ Determine cluster matched global  │ │
│  │        trajectory set             │ │
│  └────────────────┬─────────────────┘ │
│                   ▼                    │
│  ┌──────────────────────────────────┐ │   S1033
│  │ Determine cost-minimum path set   │ │
│  └────────────────┬─────────────────┘ │
│                   ▼                    │
│  ┌──────────────────────────────────┐ │   S1035
│  │        Merge trajectories         │ │
│  └──────────────────────────────────┘ │
└───────────────────┬────────────────────┘
                    │
                    ▼
              ┌─────────┐
              │   End   │
              └─────────┘
```

Figure 1

**Figure 2**

Figure 3

Figure 4

Figure 5

Figure 6

<u>**700**</u>　Start

S701

Determine trajectory similarity of inter-camera trajectory pair

S7011

Determine image block similarity of inter-tracklet image block pair

S7013

Determine mean of top-n largest image block similarities

S703

Determine cluster matched global trajectory set

End

**Figure 7**

Figure 8

**900**

Single-camera multi-target tracking unit — 901

— 903

Multi-camera multi-target matching unit

— 9031

Clustering unit

— 9033

Cost-minimum path determining unit

9035 —

Merging unit

**Figure 9**

**1000**

— 1001

Memory

— 1003

Processor

**Figure 10**

1100

Figure 11

# EP 4 303 813 A1

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ERGYS RISTANI ET AL: "Features for Multi-target Multi-camera Tracking and Re-identification", EYE IN-PAINTING WITH EXEMPLAR GENERATIVE ADVERSARIAL NETWORKS, 28 March 2018 (2018-03-28), pages 6036-6046, XP055590909, DOI: 10.1109/CVPR.2018.00632 ISBN: 978-1-5386-6420-9 | 1-6,11, 14,15 | INV. G06T7/246 G06T7/292 |
| A | * abstract * * Section 3 * | 7-10,12, 13 | |
| Y | JIANG XIAOYAN ET AL: "A graph-based MAP solution for multi-person tracking using multi-camera systems", 2014 INTERNATIONAL CONFERENCE ON COMPUTER VISION THEORY AND APPLICATIONS (VISAPP), SCITEPRESS, vol. 3, 5 January 2014 (2014-01-05), pages 343-350, XP032792200, [retrieved on 2015-10-08] | 1-6,11, 14,15 | |
| A | * abstract * * Sections 2, 3 * | 7-10,12, 13 | TECHNICAL FIELDS SEARCHED (IPC) G06T |
| Y | Zhang Yifu ET AL: "ByteTrack: Multi-Object Tracking by Associating Every Detection Box", , 14 October 2021 (2021-10-14), XP055945714, Retrieved from the Internet: URL:https://arxiv.org/pdf/2110.06864v2.pdf [retrieved on 2022-07-25] | 2-6 | |
| A | * abstract * * Sections 3, 4 * | 1,7-15 | |

The present search report has been drawn up for all claims

| Place of search | Date of completion of the search | Examiner |
|---|---|---|
| Munich | 27 October 2023 | Tessens, Linda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 303 813 A1**

**REFERENCES CITED IN THE DESCRIPTION**

**Patent documents cited in the description**

- CN 202210793867